## Europäisches Patentamt

## European Patent Office

## Office européen des brevets

(19)

(11) Numéro de publication: **0 120 737**
**B1**

(12) FASCICULE DE BREVET EUROPEEN

(45) Date de publication du fascicule du brevet:
**24.06.87**

(51) Int. Cl.⁴: **G 01 H 9/00**, G 02 F 1/03

(21) Numéro de dépôt: **84400353.3**

(22) Date de dépôt: **21.02.84**

(54) Hydrophone à fibre optique.

(30) Priorité: **25.02.83 FR 8303130**

(43) Date de publication de la demande:
**03.10.84 Bulletin 84/40**

(45) Mention de la délivrance du brevet:
**24.06.87 Bulletin 87/26**

(84) Etats contractants désignés:
**DE GB IT NL SE**

(73) Titulaire: **THOMSON-CSF, 173, Boulevard Haussmann,
F-75379 Paris Cedex 08 (FR)**

(72) Inventeur: **Graindorge, Philippe, THOMSON CSF
SCPI 173, bld Haussmann, F-75379 Paris Cedex 08 (FR)**
Inventeur: **Arditty, Hervé, THOMSON CSF SCPI 173, bld
Haussmann, F-75379 Paris Cedex 08 (FR)**

(56) Documents cités:
**EP - A - 0 079 268
US - A - 3 903 496**

**OPTICS LETTERS, vol. 5, no. 11, novembre 1980, pages
485-487, Optical Society of America, New York, US; T.J.
HALL et al.: "Detector for an optical-fiber acoustic
sensor using dynamic holographic interferometry"
APPLIED OPTICS, vol. 18, no. 24, 15 décembre 1979,
page 4085, New York, US; B. BUDIANSKY et al.:
"Pressure sensitivity of a clad optical fiber"
APPLIED OPTICS, vol. 19, no. 17, 1er septembre 1980,
pages 2926-2929, New York, US; D.A. JACKSON et al.:
"Elimination of drift in a single-mode optical fiber
interferometer using a piezoelectrically stretched
coiled fiber"**

**Description**

L'invention se rapporte à un hydrophone à fibre optique. L'invention se rapporte au domaine de la détection acoustique en milieu marin et a plus particulièrement pour objet un hydrophone à fibre optique monomode fonctionnant par effet élastooptique, utilisant les effets d'intéraction entre l'onde acoustique à détecter et une fibre optique monomode sur laquelle cette onde acoustique agit.

L'invention concerne un hydrophone comportant en particulier une fibre optique monomode plongée dans l'eau où se propage l'onde sonore. La propagation de cette onde sonore produit dans le milieu de propagation des variations de pression qui provoquent par effet élasto-optique des variations des paramètres géométriques et optiques de la fibre. Une onde optique se propageant dans la fibre optique subit des variations de phase susceptibles d'être détectées par interférométrie, au moyen d'une seconde fibre optique monomode formant bras de référence. Les liaisons optiques entre la fibre optique plongée dans l'eau, qui constitue le bras de mesure, et la fibre optique de référence sont établies dans une structure optique qui forme un dispositif interférométrique construit selon le principe de l'interféromètre de MICHELSON. L'interféromètre de MICHELSON comprend généralement une source de rayonnement monochromatique, un moyen optique diviseur de faisceau tel qu'une lame semi-transparente qui alimente deux bras de mesure terminés par des miroirs et un détecteur de rayonnement agencé pour recueillir en superposition via le moyen optique diviseur les rayonnements ayant effectué l'aller-retour selon les deux bras de mesure. Un tel dispositif permet de mesurer un grand nombre de grandeurs physiques susceptibles d'affecter la propagation d'un rayonnement optique le long des bras de mesure. Parmi ces grandeurs physiques, certaines sont à l'origine d'effets réciproques qui produisent le même retard de transmission quel que soit le sens de propagation du rayonnement optique dans chacun des bras de mesure. D'autres grandeurs physiques sont à l'origine d'effets non réciproques qui influencent le retard de transmission de manière différente selon le sens de propagation du rayonnement optique. Les deux effets non réciproques habituellement considérés sont l'effet FARADAY et l'effet intertiel relativiste. L'effet FARADAY intervient lorsque le bras de mesure comporte un milieu matériel dans lequel un champ magnétique crée une orientation préférentielle de spin des électrons.

L'effet intertiel relativiste mis en œuvre dans un interféromètre en anneau se nomme effet SAGNAC et l'interféromètre prend alors le nom de gyromètre.

Les effets réciproques ne sont pas liés à la destruction de la symétrie de l'espace ou d'un milieu matériel. On les observe lorsque les bras de mesure sont le siège de contraintes mécaniques optiques ou thermiques.

On connaît par ailleurs des systèmes optiques réflecteurs basés sur l'utilisation de milieux photoréfractifs qui permettent de réfléchir un front d'onde incidente sous la forme d'un front d'onde conjugué. Un miroir ordinaire renvoie la lumière comme si elle provenait d'un objet virtuel non confondu avec l'objet qui éclaire ce miroir. Au contraire, un milieu photoréfractif peut réfléchir un front d'onde ayant une phase conjuguée qui ramène vers l'objet un rayonnement isomorphe de celui qui en était issu. En présence d'effets réciproques, cette réflexion interactive assure l'insensibilité à de tels effets, à condition qu'ils n'aient pas varié durant l'aller-retour du rayonnement et que le milieu photoréactif ait pu s'adapter aux variations de ces effets. Par contre, cette aptitude à l'effacement des effets réciproques ne nuit pas à la mesure interférométriques des effets non réciproques.

La demande de brevet européen publiée sous le numéro EP-A 0 021 945 décrit un premier dispositif de l'art antérieur qui comprend un hydrophone à fibre optique monomode fonctionnant par effet élasto-optique, comportant une source laser monomode couplée à une plaquette de circuit optique intégré dans laquelle sont réalisés des moyens de séparation du rayonnement issu de la source vers deux premiers guides optiques intégrés et des moyens de recombinaison du rayonnement guidé par deux seconds guides optiques intégrés, une première fibre monomode formant bras de mesure destinée à être plongée dans un milieu d'interaction soumis à l'onde acoustique à détecter, et une seconde fibre optique monomode formant bras de référence, ces deux fibres ayant leurs extrémités rigidement couplées respectivement à l'un des premiers et à l'un des seconds guides optiques, l'hydrophone comportant en outre un modulateur de phase à commande électrique agissant sur l'un des guides optiques intégrés pour introduire un déphasage entre les ondes guidées, des moyens de détection du rayonnement émergeant des moyens de recombinaison, et un dispositif de traitement des signaux détectés destiné à fournir un signal de commande au modulateur de phase tel que le déphasage entre les deux bras indépendant de l'onde acoustique à détecter soit maintenu voisin d'un point de sensibilité maximum, le dispositif de traitement délivrant de plus un signal de mesure caractéristique de l'onde acoustique.

De plus la demande de brevet européen publié, après la date du dépôt prioritaire sous le numéro EP-A-0 079 268 décrit un interféromètre de MICHELSON dans lequel les miroirs sont remplacés par un miroir conjugé. Cet interféromètre est sensible aux effets non réciproques. Ce miroir est dit «conjugué», en effet une onde divergente incidente dans le milieu est réfléchie sous la forme d'une onde convergente conjuguée de l'onde incidente. C'est un interféromètre de type MICHELSON à miroir photoréactif comprenant une source de rayonnement monochromatique, un moyen optique diviseur de faisceau fournissant deux fractions de ce rayonnement à deux bras de mesure se terminant par des moyens réflecteurs et un photodétecteur, ce photodétecteur est agencé pour recueillir en superposition ces deux fractions de rayonnement ayant effectué l'aller-retour dans les deux bras.

Les deux fractions de rayonnement interfèrent à l'intérieur de ce milieu photoréfractif, un réflecteur permettant alors de réfléchir sous incidence normale vers ce milieu la première fraction de rayonnement qui l'a traversé. Mais ce deuxième dispositif de l'art antérieur, qui utilise le front d'onde conjugué de la première fraction de l'onde incidente qui atteint le milieu photoréfractif nécessite que l'onde réfléchie soit l'onde conjuguée de l'onde incidente et donc que le milieu ne déforme pas le front d'onde de l'onde incidente.

Par rapport au premier dispositif de l'art antérieur, l'hydrophone de l'invention constitue un filtre de fréquence «passe-haut» et permet d'éliminer les conséquences des perturbations de fréquences basses. De plus il permet un auto-alignement du faisceau conjugué qui se recouple dans la fibre sans nécessiter d'alignement. Il permet aussi une téléalimentation dans le milieu d'interaction ce qui le rend indétectable par les moyens classiques de détection tels que le sonar.

L'invention a donc pour objet un hydrophone à fibre optique comportant un ensemble d'émission et de détection d'un rayonnement comprenant une source de rayonnement monochromatique, des moyens de détection du rayonnement, et des premiers moyens de séparation, cette source et ces moyens de détection étant reliés à ces moyens de séparation, caractérisé en ce qu'il comprend une tête de mesure plongée dans un milieu d'interaction soumis à l'onde acoustique à détecter, et un élément guide d'onde monomode de liaison reliant cet ensemble à cette tête, cette tête comprenant, réunis dans un même boitier, de seconds moyens de séparation et de mélange, un guide d'onde optique monomode formant bras de référence, un milieu photoréfractif, et un moyen réflecteur du rayonnement; et une fibre optique monomode formant bras de mesure qui est plongée dans le milieu d'interaction, les seconds moyens de séparation et de mélange distribuant une première et une seconde fraction dudit rayonnement auxdits bras de mesure et de référence, ces deux fractions de rayonnement se recoupant dans le milieu photoréfractif, ce moyen réflecteur permettant de réfléchir la première de ces deux fractions de rayonnements, ces second moyens de séparation et de mélange permettant alors la recombinaison du rayonnement après un parcours du rayonnement dans ces bras de mesure et de référence, les premiers moyens de séparation permettant aux moyens de détection de détecter ce rayonnement après parcours dans le guide d'onde de liaison.

L'invention sera mieux comprise et d'autres caractéristiques apparaîtront à l'aide de la description qui suit en référence aux figures annexées.

La figure 1 représente un interféromètre de MICHELSON de l'art antérieur.

La figure 2 illustre l'hydrophone de l'invention.

La figure 3 illustre une variante d'hydrophone de l'invention.

L'hydrophone selon l'invention a une structure d'interféromètre et comporte sur l'un des chemins optiques de l'interféromètre une fibre optique monomode immergée dans le champ d'onde acoustique à détecter supposé uniforme, de pression P et de fréquence angulaire $\omega_S$. Ce champ d'onde acoustique induit par effet élastooptique une variation d'indice $\Delta n$ de l'indice n de la fibre. Cette variation d'indice se traduit par une déphasage $\Delta \Phi$ fonction de la variation d'indice $\Delta n$, de la longueur $\iota$ de la fibre immergée et de la longueur d'onde $\lambda$ de l'onde optique tels que:

$$\Delta \Phi (\omega_s) = \frac{2 \pi \iota}{\lambda} \Delta n.$$

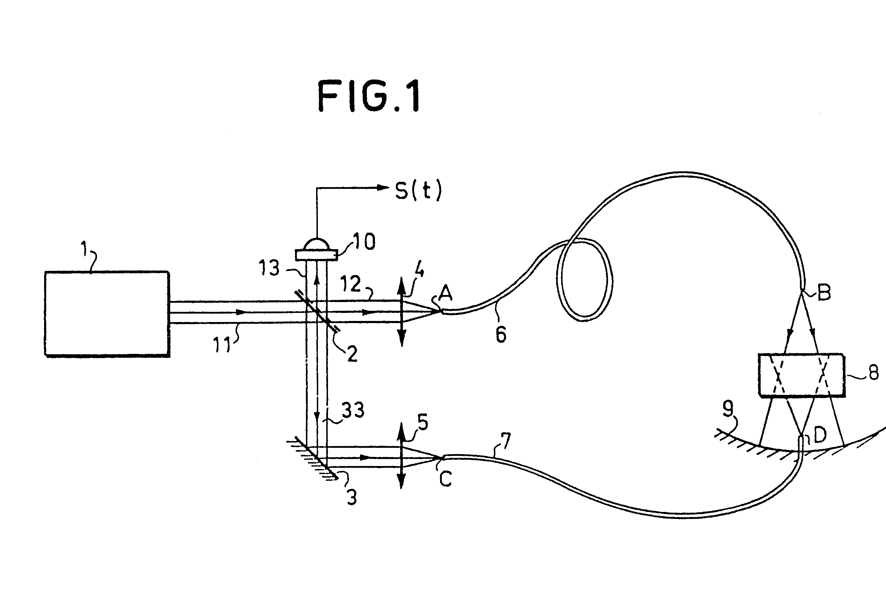

La figure 1, représente un interféromètre à deux bras de l'art antérieur. Cet interféromètre possède en commune avec l'interféromètre de MICHELSON classique une source 1 de rayonnement monochromatique qui émet un faisceau 11 en direction d'un moyen optique diviseur 2 constitué par exemple par une lame plane semi-réfléchissante. Le rayonnement 11 incident sur cette lame 2 se scinde en une première portion transmise 12 et une seconde portion réfléchie 33. La portion transmise 12 est focaliseé par une lentille 4 à l'entrée A d'un premier guide d'onde optique 6 qui réémet cette portion de rayonnement par sa sortie B. La portion réfléchie 33 est renvoyée par un miroir 3 vers une lentille 5 qui focalise le rayonnement sur l'entrée C d'un second guide d'onde optique 7. L'extrémité D du guide d'onde 7 rayonne un faisceau divergent qui va à la rencontre du faisceau divergent rayonné par l'extrémité B du guide d'onde 6. L'interférence des deux portions de rayonnement est détecté par le photodétecteur 10 qui délivre un signal S(t) représentatif du défilement des franges d'interférence. Les deux bras de mesure de l'interféromètre sont alors composés l'un des éléments 4, 6 et l'autre des éléments 3, 5, 7. Cet interféromètre de la figure 1 met en œuvre un milieu photoréfractif 8 et un miroir sphérique concave 9 pour réfléchir de B en A et de D en C les portions de rayonnement qui ont circulé dans les deux bras de mesure. Le miroir sphérique concave 9 est agencé pour recevoir à travers le milieu 8 un front d'onde sphérique issu de l'extrémité B de telle façon que ce front d'onde soit réfléchi sous incidence normale et vienne se focaliser sur l'extrémité B. Le milieu photoréfractif 8 coopère avec le miroir 9 et le rayonnement de pompage issu de l'extrémité B pour renvoyer vers l'extrémité D un rayonnement qui ait la phase conjuguée du rayonnement émis par cette extrémité D et qui y converge spontanément. De plus le rayonnement qui émerge de l'extrémité B et qui traverse le milieu photoréfractif 8 arrive une incidence normale sur la surface réfléchissante du miroir 9 qui le renvoie vers l'extrémité B après retraversée du milieu 8. Ce rayonnement peut être considéré comme le faisceau de pompage du milieu photoréfractif 8.

Le rayonnement provenant de l'extrémité D du guide d'onde 7 constitue alors un faisceau signal qui interfère au sein du milieu photoréfractif 8 avec le faisceau de pompage. Cette interférence module spatialement les propriétés réfringentes du milieu photoréfractif et il s'y développe un système de strates d'indice que l'on peut considérer comme un hologramme dynamique de la structure du rayonnement contenu dans le faisceau signal. En recevant le rayonnement de pompage qui traverse le milieu photoréfractif 8 après réflexion normale sur le miroir sphérique 9, l'hologramme dynamique diffracte vers l'extrémité D du guide d'onde 7 une reconstruction conjuguée du rayonnement qui émerge de cette extrémité. Si le rayonnement qui émerge de l'extrémité D en direction du milieu photoréfractif est une onde électromagnétique progressive, la reconstitution conjugée est l'onde électromagnétique régressive associée ayant des fronts d'onde isomorphes avec changement de signe du déphasage, celui-ci étant évalué en prenant pour référence la référence de phase du faisceau de pompage.

D'après ce qui précède, on voit que le réseau de strates du milieu photoréfractif 8 se comporte comme un miroir de renvoi vis-à-vis de l'extrémité D du second bras de mesure de l'interféromètre.

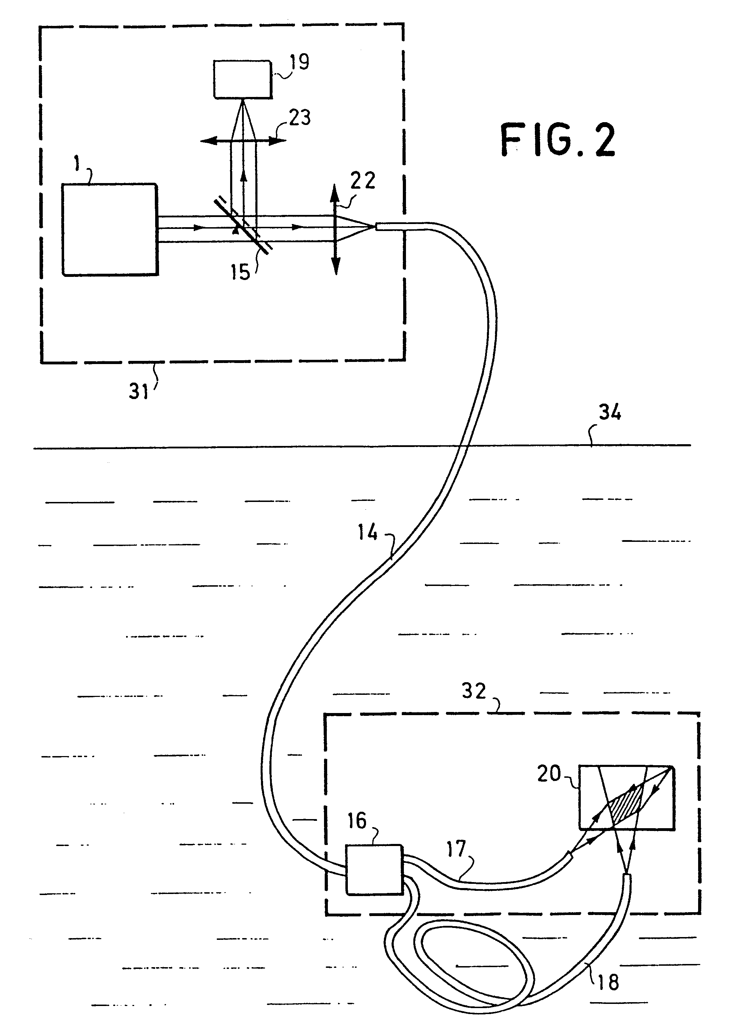

Le dispositif de l'invention utilise un interféromètre de MICHELSON, mais c'est un hydrophone à fibre optique dont le fonctionnement est basé sur un moyennage dans le cristal photoréfractif du signal détecté. Ce dispositif est représenté schématiquement à la figure 2. Il comprend:

deux ensembles:

– un ensemble 31 d'émission et de détection du rayonnement.

– une tête 32 de mesure plongée dans le milieu d'interaction 34 soumis à l'onde acoustique.

Ces deux ensembles sont reliés par un élément guide d'onde 14 qui peut être par exemple une fibre optique. Un bras de mesure, comprenant une fibre optique, est relié à cette tête de mesure, ce bras de mesure est plongé dans le milieu d'interaction 34 soumis à l'onde acoustique.

Plus précisément le dispositif de l'invention peut se composer en un certain nombre d'éléments:

– Un laser 1 dont la longueur d'onde correspond à la région spectrale de sensibilité pour la photoconduction du matériau photoréfractif 8 utilisé. Dans le cas de matériaux tels que l'oxyde de bismuth-silicium (BSO), de bismuth germanium (BGO) ou le titanate de baryium (BaTiO3), la longueur d'onde peut être comprise entre 575 et 450 nm, permettant d'utiliser les lasers Argon et Krypton par exemple.

– Un séparateur de faisceau 15 qui permet au photodétecteur 19 de détecter l'interférence des deux fractions de rayonnement reçues en retour des bras de mesure 18 et de référence 17. Ce photodétecteur 19 délivre un signal représentatif des franges d'interférences.

– Un guide d'onde optique monomode 14 conservant la polarisation, ce guide joue le rôle de filtre spatial. Ce filtre spatial peut former par exemple un bras de téléalimentation. Ce filtre permet de ne conserver que l'ordre zéro d'interférence, car le guide d'onde utilisé est monomode; Il peut donc permettre de téléalimenter l'ensemble de l'interféromètre. L'avantage est de pouvoir faire une mesure loin de la source laser. Par ailleurs, l'interféromètre étant constitué de matériaux diélectriques est indétectable par des moyens classiques (sonar, radar), ce qui n'est pas le cas de la source laser. La téléalimentation présente là encore un grand intérêt.

– Un séparateur 16, séparant le faisceau incident en deux fractions de rayonnement qui sont transmises par les deux bras de mesure (18) et de référence (17). Il peut être constitué par une lame séparatrice, ou un séparateur en optique intégré ou un coupleur à fibres. Un tel coupleur est réalisé par exemple par deux fibres érodées et acolées; le couplage étant un couplage par ondes évanescentes.

– Deux bras 17, 18 dont l'un peut être rendu sensible aux variations de pression par enrobage d'un matériau adapté. Cet enrobage du bras de mesure 18 n'est pas nécessaire si l'autre bras est insensible, c'est-à-dire par exemple s'il est interne à un boitier 32 comme représenté à la figure 2.

Cet enrobage peut être réalisé, par exemple par une grosse section d'un matériau très élastique tel que du caoutchouc qui, en présence d'ondes acoustiques, se comprime et entraine donc un allongement de la fibre et donc une variation de la phase du signal véhiculé. Cette fibre représente le bras «capteur» de l'interféromètre, l'autre étant le bras référence. Le bras référence doit permettre d'égaliser les trajets optiques. On peut raccourcir de beaucoup sa longueur si la source possède une longueur de cohérence suffisante. Ainsi on peut considérer un bras de mesure d'une longueur de 10 mètres, avec un bras référence d'une longueur de 1 mètre, si l'on a une longueur de cohérance au moins égale à 9 mètres.

– Un matériau photoréfractif 8, sert de milieu d'interaction pour les ondes issues des deux fibres. Ce matériau doit être photoconducteur et électrooptique.

Comme milieu photoréfractif, on peut utiliser les cristaux d'oxyde de bismuth-silicium (BSO), d'oxyde de bismuth-germanium (BGO), mais également le titanate de baryum ($B_aT_iO_3$), le niobate de potassium ($K N_b O_3$), le niobate de strontium et baryum (SBN) et le niobate tantalate de potassium (KTN), qui peuvent être purs, ou dopés afins d'être sensible aux longueurs d'onde plus élevées (supérieures à 0,8 μm).

Un milieu photoréfractif est un milieu photoexcitable dans lequel des photons incidents créent des porteurs de charge qui peuvent diffuser au sein du matériau lorsque l'éclairement comporte des zones sombres alternant avec des zones claires. Ce milieu est également électrooptique, ce qui permet d'observer des variations d'indice de réfraction engendrées par le champ électrique interne qui, lui-même, provient de la migration des porteurs de charge. Sur la base de ces propriétés, on peut conditionner optiquement un milieu photoréfractif en y faisant interférer un faisceau signal ou faisceau objet et un faisceau de pompage. Le réseau de franges génère des strates d'indice qui, en diffractant le faisceau de pompage, peuvent engendrer un faisceau signal conjugué. Ceci se produit en conformité avec la technique de l'interférométrie quatre ondes, lorsque le faisceau de pompage qui a traversé le milieu est renvoyé vers celui-ci par un miroir assurant le retour inverse.

– Eventuellement un polarisateur (cristal ou polaroïd) placé entre les bras de mesure et de référence et le milieu photoréfractif. En effet le miroir conjugué ne fonctionne que dans une polarisation de direction parallèle à l'axe C du cristal. Un polarisateur est donc nécessaire si l'on utilise une fibre multimode, ou si cette fibre est monomode mais ne conserve pas la polarisation rectiligne. Cet interféromètre est constitué de 4 ondes, chacune ayant un rôle différent. Chacun des bras de l'interféromètre est porteur de deux ondes: l'onde de «référence écriture» ou de pompage et l'onde de «relecture» respectivement sur les trajets aller et retour du bras de référence; l'onde «objet» ou signal et l'onde «conjuguée» respectivement sur les trajets aller et retour du bras de mesure.

Les ondes référence et objet créent dans le matériau photoréfractif un réseau de phase. Le réseau est relu par l'onde «référence» réfléchie, qui devient alors l'onde «relecture». Cette relecture crée l'onde spatialement conjuguée de l'onde objet, qui après recouplage dans la fibre «capteur» vient interférer, à la sortie de l'interféromètre, avec l'onde «relecture» elle-même recouplée dans la fibre «référence».

Lorsque la longueur optique de l'un des deux bras varie de façon réciproque, la différence de phase introduite modifie le réseau inscrit dans le «miroir conjugué», mais la figure d'interférence à la sortie de l'interféromètre n'est pas modifiée.

Le dispositif de l'invention tient compte du temps nécessaire à la modification du réseau inscrit pour utiliser l'interféromètre avec des signaux de phase variable dans le temps.

Le bras de référence fournit l'onde de référence écriture, et l'onde de relecture. La faisceau «objet» est également dirigé sur le cristal, de manière à interférer avec la faisceau de référence écriture. L'onde de relecture peut être obtenue par réflexion sur un miroir sphérique permettant de réfléchir sous incidence normale vers le milieu photoréfractif la fraction de rayonnement qui a traversé celui-ci.

Elle peut aussi être obtenue en utilisant un oscillateur extérieur qui comporte un dispositif de conjugaison de phase fonctionnant sans pompage extérieur et avec un mixage quatre-ondes dans un cristal photoréfractif, par exemple en titanate de baryum. Cet oscillateur extérieur est une cavité optique oscillante centrée sur le dispositif de conjugaison de phase de manière à réaliser la conjugaison du faisceau de pompe sans l'apport d'une autre source d'énergie; le conjugué du faisceau de pompage formant le faisceau de relecture. Ce dispositif comporte deux miroirs alignés pour former une cavité résonnante et permet une réflectivité de 10% d'une onde incidente à répartition gaussienne.

Elle peut aussi être obtenue en employant un «mixage quatre-modes» dégénéré utilisant l'effet photoréfractif dans, par exemple, un cristal en titanate de baryum. Le coin du cristal peut former avec un réseau autoinduit, créé par la non uniformité spatiale du faisceau de pompage, situé dans ce cristal une cavité optique oscillante comme décrit précédemment. Ce réseau autoinduit est différent du réseau résultant de l'interférence dans ce cristal de faisceaux de pompage et objet. La deuxième onde de pompage qui est normalement requise pour un mixage quatre-ondes est dérivé de l'onde incidente, elle-même, dans le cristal par couplage de type «mixage quatre-ondes» avec la cavité oscillante autoinduite dans le cristal. C'est un dispositif de ce type qui est considéré à la figure 2.

L'angle d'incidence du faisceau objet est tel que celui-ci ne puisse pas se conjuguer sur le coin du cristal, contrairement au faisceau référence.

Le faisceau de relecture relit l'hologramme formé entre le faisceau de référence et le faisceau objet, pour donner le faisceau conjugué. Ce milieu photoréfractif 20 permet de «réfléchir» vers le séparateur de faisceau 16 les fractions de rayonnement qui ont circulé dans les bras de mesure de référence dans le sens aller et retour après interférence dans ce même milieu 20.

Le milieu photoréfractif 20 coopère avec le rayonnement de pompage issu de l'extrémité du bras de référence, pour renvoyer vers l'extrémité du bras de mesure un rayonnement qui ait la phase conjuguée du rayonnement émis par cette extrémité et qui converge spontanément. Sur la base des propriétés d'un tel milieu photoréfractif 20, on peut donc le conditionner optiquement en y faisant interférer un faisceau signal et un faisceau de pompage. Le réseau de franges engendre des strates d'indice qui, en diffractant le faisceau de pompage, peuvent engendrer un faisceau signal conjugué. Ceci se produit en conformité avec la technique de l'interférométrie quatre ondes, lorsque le faisceau de pompage qui a traversé le milieu est renvoyé vers celui-ci par réflection sur un coin du cristal permettant ainsi le retour inverse de ce faisceau.

Le rayonnement provenant de l'extrémité du bras de mesure 18 constitue alors un faisceau signal qui interfère au sein du milieu photoréfractif 20 avec le faisceau de pompage. Cette interférence module spatialement les propriétés réfringentes du milieu photoréfractif et il s'y développe un système de strates d'indice que l'on peut considérer comme un hologramme dynamique de la structure du rayonnement contenu dans le faisceau signal. En recevant le rayonnement de pompage qui traverse le milieu photoréfractif 20 après réflexion sur le coin du cristal 20, l'hologramme dynamique diffracte vers l'extrémité du bras de mesure 18 une reconstitution conjuguée du rayonnement qui émerge de cette extrémité. Si le rayonnement qui émerge de cette même extrémité en direction du milieu photoréfractif est une onde électromagnétique progressive, la reconstitution conjuguée est l'onde électromagnétique régressive associée ayant des fronts d'onde isomorphes avec changement de signe du déphasage, celui-ci étant évalué en prenant pour référence la référence de phase du faisceau de pompage.

Ainsi le réseau de strates du milieu photoréfractif se comporte comme un miroir de renvoi vis-à-vis de l'extrémité du bras de mesure. Cette fonction réflectrice n'impose pas de condition particulière au faisceau signal, puisque le renvoi du rayonnement de pompage par le coin du cristal 20 conserve la forme des fronts d'onde. On choisira donc un guide d'onde 17 de type monomode et la source de rayonnement 1 devra fournir un rayonnement de longueur cohérente appropriée. La source 1 est par exemple un laser hélium-néon ou laser argon ou un laser semiconducteur monomode, en fonction de la longueur d'onde de sensibilité du cristal.

La mesure se fait comme suit:

Si une perturbation de phase variable est appliquée à l'un des bras, l'hologramme construit contient l'information de la phase moyenne du faisceau perturbé, c'est-à-dire la composante continue et très basse fréquence. La composante alternative est supposée trop rapide devant la fréquence de coupure d'enregistrement holographique dans le cristal pour être enregistrée.

La phase du faisceau conjuguée est donc égale à l'opposée de la valeur moyenne de la perturbation. En repassant à travers celle-ci, ce faisceau subit à nouveau le déphasage dû à la perturbation, et seule la composante alternative est détectée à la sortie.

En effet la phase du faisceau conjugué à la sortie est égale à $(-\Phi_o) + (\Phi_o + \Phi_1 \sin\omega t) = \Phi_1 \sin \omega t$. ($\Phi_o$ déphasage appliqué en continu, $\Phi_1$ déphasage périodique).

Dans le cas où la perturbation est appliquée au bras référence, on peut utiliser l'équation suivante:

$$
\begin{aligned}
&\text{ici on a} && \Phi_{conj} = \Phi_{relect} + \Phi_{hologramme} \\
& && \Phi_{relect} = \Phi_o + \Phi_1 \sin \omega t, \\
& && \Phi_{hologramme} = \Phi_o \\
& && \Phi_{objet} = 0 \\
&\text{d'où} && \Phi_{conj} = 2\Phi_o + \Phi_1 \sin \omega t \\
&\text{et à la sortie} && \Phi_{relect} = 2\Phi_o + 2\Phi_1 \sin \omega t
\end{aligned}
$$

Dans ce cas également, le déphasage entre les deux faisceaux à la sortie est de $\Phi_1 \sin \omega t$. Le résultat est donc une mesure de la composante du signal, de fréquence supérieure à la fréquence de coupure du cristal (qui peut varier entre lns et quelques heures selon les conditions), et supression de la composante de fréquence inférieure, et en particulier de la composante continue. La stabilité de la composante continue permet d'éviter un asservissement correcteur de zéro habituellement utilisé dans ces dispositifs.

Soit $\Delta\Phi$ la différence de phase entre les deux ondes qui sortent des bras de mesure et de référence après parcours de ceux-ci, en l'absence de perturbation «non réciproque» $\Delta\Phi$ est nul.

La sensibilité de l'interféromètre est très faible si la différence de phase $\Delta\Phi$ est peu différente de zéro. C'est le cas si on désire mesurer de faibles signaux acoustique.

Pour augmenter la sensibilité de l'interféromètre on peut introduire un biais «non réciproque» constant dans la phase des deux ondes circulant en sens inverses de façon à déplacer le point de fonctionnement de l'interféromètre.

Dans le cas d'une fonction variant selon une fonction cosinusoïdale, le point de plus haute sensibilité est obtenu par les angles de $(2K + 1) \pi/2$, avec K nombre entier. On peut donc choisir un biais introduisant une variation de phase sur chaque onde. On peut donc introduire sur le parcours des ondes un modulateur de phase. Ainsi un système de modulation de phase peut être utilisé, pour améliorer la réponse du système. Pour réaliser cette modulation, on peut considérer par exemple un modulateur optique intégré qui peut comporter deux électrodes disposées de part et d'autre d'un guide d'onde, à la surface d'un substrat électrooptique. Mais ce peut être aussi un cylindre creux d'un matériau piézoélectrique sur lequel est collé la fibre constituant le bras de mesure. Ce cylindre excité par un signal se dilate et se contracte et entraine donc un allongement de la fibre qui se traduit par une variation de phase du signal véhiculé.

Mais la variation périodique à mesurer doit être plus lente que la vitesse de modulation. Pour l'extraire il suffit donc d'effectuer une démodulation synchrone ou un hétérodynage.

Le ou les dispositifs modulateur de phase peuvent être chacun scindés en deux parties identiques situées symétriquement aux deux extrémités du trajet optique dans le bras de mesure et de référence et excités en opposition. Cette disposition assure une symétrisation supplémentaire des phénomènes qui réduit les erreurs du second ordre provenant d'éventuelles non linéarités des modulateurs.

L'excursion de cette modulation doit être assez faible pour ne pas brouiller le réseau holographique. En effet, le réseau enregistré est la moyenne de l'éclairement en chaque point S.

Dans le cristal le déphasage est $\Phi = (\Phi_1 \sin \omega t + Kz)$ K est le vecteur d'onde du réseau d'illumination et z la position dans le cristal dans une direction perpendiculaire aux franges d'éclairement), l'éclairement moyen en un point est proportionnel à

$$I(z) = \frac{1}{2\pi} \int_0^{\frac{2\pi}{\omega}} \sin^2(\Phi_1 \sin \omega t + Kz)\, dt = \frac{1}{2} + J_o(2\,\Phi_1) \cos 2Kz$$

Pour conserver la variation spatiale, c'est-à-dire le terme cos 2 Kz, il faut donc que la valeur de $J_o(2\Phi_1)$ reste assez importante, et donc que la profondeur de modulation $\Phi_1$ soit relativement faible, (c'est-à-dire $\Phi_1 \le 0{,}5$ rd pour $J_i(2\Phi_1) \ge 0.8$). La fréquence f de cette modulation doit être très supérieure à la fréquence maximale du signal à détecter, pour que la récupération de ce signal se fasse par hétérodynage à 2f. Il peut s'agir d'une modulation sinusoïdale ou par un signal carré.

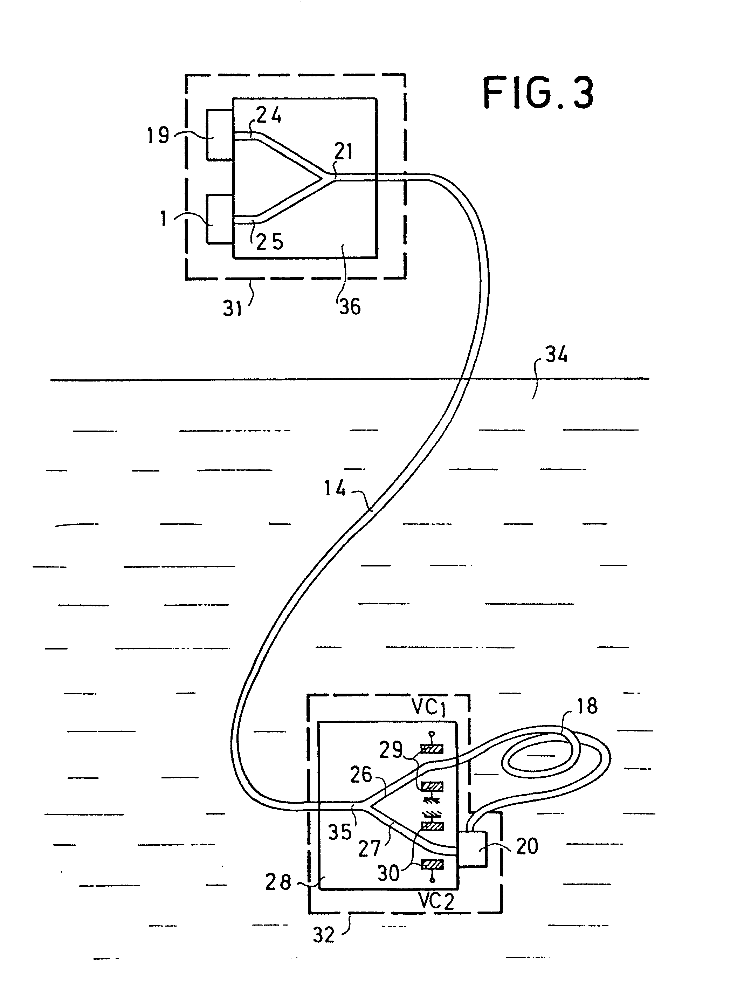

Le dispositif représenté à la figure 3 est une variante du dispositif de l'invention réalisé en optique intégrée. Il comprend de même un ensemble d'émission et de détection du rayonnement qui se compose de la source 1 est du détecteur 19 et des moyens de séparation et de mélange qui sont réalisés par des guides optiques intégrés ayant la forme d'un «Y» (24, 25, 21). Le filtre spatial est réalisé par la fibre optique 24. La tête de mesure comprend elle aussi des guides d'onde ayant la forme d'un «Y» (35, 26, 27).

Le milieu interactif est en 20. Le bras de référence est réalisé par le guide d'onde 27 et le bras de mesure principalement par la fibre 18.

Les guides d'ondes sont réalisés par intégration dans un substrat. Le substrat peut être choisi parmi les matériaux suivants: Niobate de lithium ou tantalate de lithium dans lesquels on fait diffuser, pour réaliser les guides d'onde, du titane ou respectivement du niobium. Le substrat peut, aussi, être choisi en arséniure de gallium dans lequel les guides d'onde ont été réalisés par implantation ionique ou protonique ou en Titanate de Baryum, les guides étant fabriqués par une méthode précédente ou par renversement de domaines. Le modulateur est décomposé en deux modulateurs 26 et 27 placés aux deux extrémités de la fibre. De façon plus précise, les modulateurs mis en œuvre dans l'invention peuvent mettre à profit différents effets électro-optiques connus tel l'effet Pockels, l'effet Kerr, ce à titre d'exemple non limitatif.

Ces deux coupleurs, réalisés par des séparateurs de rayonnements optiques composés de guides d'ondes monomodes reliés entre eux pour former des Y, étant reliés entre eux par une de leurs branches ainsi que par la fibre optique 14, jouent le rôle tenu précédemment par les lames semitransparentes dans la figure 2. Dans ce cas le deuxième «Y» peut être réalisé dans le milieu photoréfractif lui-même et on utilise alors la rétroréflexion des ondes obtenu par un couplage avec un coin de ce milieu comme décrit précédemment.

**Revendications**

1. Hydrophone à fibre optique comportant un ensemble d'émission et de détection d'un rayonnement (31) comprenant une source (1) de rayonnement monochromatique, des moyens de détection du rayonnement (19) et des premiers moyens de séparation (15), cette source (1) et ces moyens de détection (19) étant reliés à ces moyens de séparation (15), caractérisé en ce qu'il comprend une tête (32) de mesure plongée dans un milieu d'interaction (34) soumis à l'onde acoustique à détecter, et un élément guide d'onde monomode de liaison (14) reliant cet ensemble (31) à cette tête (32), cette tête (32) comprenant, réunis dans un même boîtier, de second moyens de séparation et de mélange (16), un guide d'onde optique monomode (17) formant bras de référence, un milieu photoréfractif (20), et un moyen réflecteur du rayonnement; et une fibre optique monomode (18) formant bras de mesure qui est plongée dans le milieu d'intéraction (34), les seconds moyens de séparation et de mélange (16) distribuant une première et une seconde fraction dudit rayonnement auxdits bras de mesure (18) et de référence (17), ces deux fractions du rayonnement se recoupant dans le milieu photoréfractif (20), ce moyen réflecteur permettant de réfléchir la première de ces deux fractions du rayonnement, ces seconds moyens de séparation et de mélange permettant alors la recombinaison du rayonnement après un parcours du rayonnement dans ces bras de mesure (18) et de référence (17), les premiers moyens de séparation (15) permettant aux moyens de détection (19) de détecter ce rayonnement après parcours dans le guide d'onde de liaison (14).

2. Hydrophone selon la revendication 1, caractérisé en ce que le bras de mesure comporte une fibre enrobée d'une gaine en caoutchouc.

3. Hydrophone selon la revendication 1, caractérisé en ce que le milieu photoréfractif (20) est réalisé en titanate de baryum.

4. Hydrophone selon la revendication 3, caractérisé en ce que la source (1) de rayonnement monochromatique est un laser Argon de longueur d'onde supérieure à 0,55 micromètres.

5. Hydrophone selon la revendication 1, caractérisé en ce que le milieu photoréfractif (20) est réalisé en niobate de strontium et baryum.

6. Hydrophone selon la revendication 1, caractérisé en ce que le milieu photoréfractif est réalisé en niobate tantalate de potassium.

7. Hydrophone selon la revendication 1, caractérisé en ce que le milieu photoréfractif est réalisé en oxyde de bismuth-silicium.

8. Hydrophone selon la revendication 1, caractérisé en ce que le milieu photoréfractif est réalisé en oxyde de bismuth-germanium.

9. Hydrophone selon la revendication 1, caractérisé en ce que le moyen réflecteur est un miroir sphérique permettant de réfléchir sous incidence normale vers ce milieu photoréfractif (20) l'une des deux fractions de rayonnement l'ayant traversé.

10. Hydrophone selon la revendication 1, caractérisé en ce que le moyen réflecteur est réalisé par un coin du milieu photoréfractif (20) par couplage d'ondes.

11. Hydrophone selon la revendication 1, caractérisé en ce que le moyen réflecteur est réalisé par une cavité oscillante extérieure.

12. Hydrophone selon la revendication 1, caractérisé en ce que le guide d'onde optique (14) formant un filtre spatial est un bras de téléalimentation.

13. Hydrophone selon la revendication 1, caractérisé en ce qu'un polariseur est placé entre les bras de mesure (18) et de référence (17) et le milieu photoréfractif (20).

14. Hydrophone selon la revendication 1, caractérisé en ce qu'il comprend des moyens de modulation de phase disposés sur le parcours du rayonnement dans au moins l'un des bras de mesure (17) ou de référence (18).

15. Hydrophone selon la revendication 14, caractérisé en ce que ces moyens de modulation de phase sont réalisés en optique intégrée.

16. Hydrophone selon la revendication 14, caractérisé en ce que ces moyens de modulations comportent un cylindre creux en matériau piézoélectrique sur lequel est collé la fibre constituant le bras de mesure (18).

17. Hydrophone selon la revendication 1, caractérisé en ce qu'il comprend les premiers moyens de séparation et les seconds moyens de séparation et de mélange des ondes entièrement réalisés en milieu solide par intégration sur un substrat (3), ces moyens de séparation et de mélange étant réalisés par des guides d'ondes ayant la forme de deux «Y» reliés entre eux par une de leurs branches (21, 35) et par le guide d'onde de liaison (14), les deux autres extrémités (25, 24) du premier «Y» étant reliés respectivement à la source (1) et aux moyens de détection (19) et les deux autres extrémités (26, 27) du second «Y» étant respectivement reliées à la première extrémité d'une fibre optique (18) formant les bras de mesure et au milieu photoréfractif (20), la seconde extrémité de la fibre optique étant elle aussi reliée à ce milieu photoréfractif (20).

18. Hydrophone selon la revendication 17, caractérisé en ce que le second «Y» est réalisé par intégration sur le substrat qui est le milieu photoréfractif (20), le moyen réflecteur étant réalisé par un couplage avec un coin de ce milieu.

19. Hydrophone selon la revendication 17, caractérisé en ce qu'au moins une paire d'électrodes est disposée de part et d'autre d'au moins une des extrémités du second «Y» pour former un modulateur de phase à effet électro-optique, ces électrodes recevant un signal de commande.

20. Dispositif selon la revendication 17, caractérisé en ce que le substrat (3) est choisi parmi les matériaux suivant: Niobate de Lithium ou Tantalate de Lithium dans lequel on a fait diffuser, pour réaliser les guides d'onde, du Titane ou respectivement du Nobium.

21. Dispositif selon la revendication 17, caractérisé en ce que le substrat (3) est en arseniure de gallium dans lequel les guides d'ondes ont été réalisés par implantation ionique ou protonique.

**Patentansprüche**

1. Lichtwellenleiter-Hydrophon, bestehend aus einem Strahlungssender- und -detektorsystem (31), welches eine homogene Strahlungsquelle (1) besitzt sowie Strahlungserfassungsmittel (19) und erste Trennungsmittel (15), wobei die Quelle (1) und die Erfassungsmittel (19) mit den Trennungsmitteln (15) verbunden sind, dadurch gekennzeichnet, dass es einen Messkopf (32) besitzt, welcher in ein von der zu erfassenden Schallwelle beeinflusstes Medium mit Wechselwirkung (34) eingetaucht ist, ebenfalls ein Monomode-Verbindungswellenleiter-Element (14), welches das System (31) mit dem Messkopf (32) verbindet, wobei der Messkopf (32) in einem einzigen Gehäuse zweite Trennungs- und Mischungsmittel (16) enthält sowie als Bezugsarm einen Monomode-Lichtwellenleiter (17), ein lichtbrechendes Medium (20) und ein Rückstrahlungsmittel; sowie als Messarm eine in das Medium (34) eingetauchte Monomode-Lichtleitfaser (18), wobei die zweiten Trennungs- und Mischungsmittel (16) einen ersten und zweiten Bruchteil der genannten Strahlung an den genannten Messarm (18) und den genannten Bezugsarm (17) senden, wobei sich diese beiden Bruchteile in dem lichtbrechenden Medium (20) überschneiden, wobei das Rückstrahlungsmittel dazu dient, den ersten der beiden Strahlungsbruchteile zu reflektieren, wobei die zweiten Trennungs- und Mischungsmittel dann nach einem ersten Durchlauf der Strahlung in dem Messarm (18) und dem Bezugsarm (17) eine Strahlungsrekombination ermöglichen, wobei die ersten Trennungsmittel (15) dazu dienen, dass die Erfassungsmittel (19) die Strahlung nach ihrem Durchlauf in dem Verbindungswellenleiter (14) erfassen.

2. Hydrophon gemäss Anspruch 1, dadurch gekennzeichnet, dass der Messarm eine mit einem Gummimantel umhüllte Faser enthält.

3. Hydrophon gemäss Anspruch 1, dadurch gekennzeichnet, dass das lichtbrechende Medium (20) aus Bariumtitanat hergestellt wird.

4. Hydrophon gemäss Anspruch 3, dadurch gekennzeichnet, dass die homogene Strahlungsquelle (1) aus einem Argonlaser mit Wellenlänge grösser als 0,55 Mikrometer besteht.

5. Hydrophon gemäss Anspruch 1, dadurch gekennzeichnet, dass das lichtbrechende Medium (20) aus Strontiumniobat und Barium hergestellt wird.

6. Hydrophon gemäss Anspruch 1, dadurch gekennzeichnet, dass das lichtbrechende Medium (20) aus Kaliumtantalat-Niobat hergestellt wird.

7. Hydrophon gemäss Anspruch 1, dadurch gekennzeichnet, dass das lichtbrechende Medium aus Wismut-Siliziumoxid hergestellt wird.

8. Hydrophon gemäss Anspruch 1, dadurch gekennzeichnet, dass das lichtbrechende Medium aus Wismut-Germaniumoxid hergestellt wird.

9. Hydrophon gemäss Anspruch 1, dadurch gekennzeichnet, dass das Rückstrahlungsmittel aus einem Kugelspiegel besteht, der dazu dient, dass einer der beiden Strahlungsbruchteile, von denen er durchquert wird, unter normalem Eintrittswinkel nach dem lichtbrechenden Medium (20) hin reflektiert wird.

10. Hydrophon gemäss Anspruch 1, dadurch gekennzeichnet, dass das Rückstrahlungsmittel durch eine Ecke des lichtbrechenden Mediums (20) durch Wellenkopplung gebildet wird.

11. Hydrophon gemäss Anspruch 1, dadurch gekennzeichnet, dass das Rückstrahlungsmittel von einem äusseren schwingfähigen Hohlraum gebildet wird.

12. Hydrophon gemäss Anspruch 1, dadurch gekennzeichnet, dass der einen Raumfilter bildende Lichtwellenleiter (14) ein Fernversorgungsarm ist.

13. Hydrophon gemäss Anspruch 1, dadurch gekennzeichnet, dass zwischen dem Messarm (18) und dem Bezugsarm (17) und dem lichtbrechenden Medium (20) ein Polarisator angebracht ist.

14. Hydrophon gemäss Anspruch 1, dadurch gekennzeichnet, dass er mit Phasenmodulationsmitteln versehen ist, die auf dem Strahlungsweg in mindestens einem der beiden Mess- und Bezugsarme (17 bzw. 18) angeordnet sind.

15. Hydrophon gemäss Anspruch 14, dadurch gekennzeichnet, dass die Phasenmodulationsmittel in integrierter Optik hergestellt werden.

16. Hydrophon gemäss Anspruch 14, dadurch gekennzeichnet, dass die Modulationsmittel aus einem Holzzylinder aus piezoelektrischem Material bestehen, auf den die den Messarm (18) bildende Faser aufgeklebt wird.

17. Hydrophon gemäss Anspruch 1, dadurch gekennzeichnet, dass es mit ersten Wellentrennungsmitteln und zweiten Wellentrennungs- und -mischungsmitteln versehen ist, welche ausschliesslich durch Integration auf ein Substrat (3) im festen Medium hergestellt werden, wobei die Trennungs- und Mischungsmittel durch Wellenleiter in Form von zwei «Y» gebildet werden, welche miteinander durch einen ihrer Schenkel (21, 35) und durch den Verbindungswellenleiter (14) verbunden sind, wobei die beiden anderen Enden (25, 24) des ersten «Y» jeweils mit der Quelle (1) und den Erfassungsmitteln (19) verbunden sind, wobei die anderen Enden (26, 27) des zweiten «Y» jeweils mit dem ersten Ende einer den Messarm bildenden Lichtleitfaser (18) und mit dem lichtbrechenden Medium (20) verbunden sind, wobei auch das zweite Ende der Lichtleitfaser mit dem lichtbrechenden Medium (20) verbunden ist.

18. Hydrophon gemäss Anspruch 17, dadurch gekennzeichnet, dass das zweite «Y» durch Integration auf das Substrat, welches das lichtbrechende Medium (20) ist, hergestellt wird, wobei das Rückstrahlungsmittel durch Kopplung mit einer Ecke dieses Mediums hergestellt wird.

19. Hydrophon gemäss Anspruch 17, dadurch gekennzeichnet, dass zur Bildung eines Phasenmodulators mit elektro-optischem Effekt mindestens ein Elektrodenpaar auf beiden Seiten von zumindest einem der Enden des zweiten «Y» angebracht ist, wobei diese Elektroden ein Steuersignal empfangen.

20. Vorrichtung gemäss Anspruch 17, dadurch gekennzeichnet, dass das Substrat (3) unter folgenden Stoffen ausgewählt wird: Lithiumniobat oder Lithiumtantalat, in das zur Bildung der Wellenleiter Titan bzw. Nobium eindiffundiert wird.

21. Vorrichtung gemäss Anspruch 17, dadurch gekennzeichnet, dass das Substrat (3) aus Galliumarsenid besteht, in welchem die Wellenleiter durch Ionen- oder Protonenimplantation hergestellt wurden.

**Claims**

1. Optical fiber hydrophone including a radiation emission and detection assembly (31) with one monochromatic radiation source (1), radiation detection means (19) and first means of separation (15), wherein this source (1) and means of detection (19) are connected to the said means of separation (15), wherein it includes one depth measurement head (32) in a medium of interaction (34) subjected to the acoustic wave to be detected, and one monomode waveguide element (14) connecting this assembly (31) to head (32), with this head (32) including, all together in a single box, second means of separation and mixing (16), one monomode optical waveguide (17) forming a reference, on one photorefractive medium (20) and one radiation reflector; and one monomode optical fiber (18) forming a measurement arm that extends into the interaction medium (34) of the second means of separation (16) distributing a first and second fraction of the said radiation to the said measurement arm (18) and reference arm (17), these two fractions of the radiation crossing each other in the photorefractive medium (20), with this reflector means reflecting the former of the two fractions of radiation, the second means of separation and mixing then allowing the recombination of the radiation after the radiation travels through the measurement arm (18) and reference arm (17), with the first means of separation (15) allowing means of detection (19) to detect this radiation after passing through the waveguide (14).

2. Hydrophone as claimed in claim 1, wherein the measurement arm includes a fiber encased in a rubber sheath.

3 Hydrophone as claimed in claim 1, wherein the photorefractive medium (20) is made of barium titanate.

4. Hydrophone as claimed in claim 3, wherein the source (1) of monochromatic radiation is an argon laser emitting a wavelength greater than 0.55 micrometers.

5. Hydrophone as claimed in claim 1, wherein the photorefractive medium is made of strontium niobate and barium.

6. Hydrophone as claimed in claim 1, wherein the photorefractive medium is made of potassium tantalate niobate.

7. Hydrophone as claimed in claim 1, wherein the photorefractive medium is made of bismuth-silicon oxide.

8. Hydrophone as claimed in claim 1, wherein the photorefractive medium is made of bismuth-germanium oxyde.

9. Hydrophone as claimed in claim 1, wherein the reflector means is a spherical mirror that reflects one of the two fractions of radiation that has passed through it, at normal incidence into the third photorefractor medium (20).

10. Hydrophone as claimed in claim 1, wherein the reflector means is provided by a corner of the photorefractive medium (20) by wave coupling.

11. Hydrophone as claimed in claim 1, wherein the reflector means is provided by an external oscillating cavity.

12. Hydrophone as claimed in claim 1, wherein the optical waveguide (14) forming a space filter is a remote supply arm.

13. Hydrophone as claimed in claim 1, wherein a polarizer is placed between measurement arm (18) and reference arm (17) and photorefractive medium (20).

14. Hydrophone as claimed in claim 1, wherein it includes phase modulation means placed along the path of the radiation in at least one of the measurement (17) or reference arm (18).

15. Hydrophone as claimed in claim 14, wherein the phase modulation means are made of integrated optics.

16. Hydrophone as claimed in claim 14, wherein the modulation means include a hollow cylinder made of piezoelectric material on which the fiber constituting the measurement (18) is bonded.

17. Hydrophone as claimed in claim 1, wherein it includes the first means of separation and second means of separation and mixing the waves, entirely made of solid medium by integration on a substrate (3), these separation and mixing means being constructed of waveguides in the form of two «Y»s interconnected by one of their branches (21, 35) and by waveguide (14), the two other extremities (25, 24) of the first «Y» being connected respectively to the source (1) and to detection means (19) and the two other ends (26, 27) of the second «Y» being connected respectively to the first end of an optical fiber (20) forming the measurement arm and to the photorefractive medium (20), the second end of the optical fiber also being connected to this photorefractive medium (20).

18. Hydrophone as claimed in claim 17, wherein the second «Y» is made by integration of the substrate which is the photorefractive medium (20), the reflector means being ensured by a coupling with a corner of this medium.

19. Hydrophone as claimed in claim 17, wherein at least one pair of electrodes is placed on either side of at least one end of the second «Y» to form a phase modulator by electrooptical effect, with these electrodes receiving a control signal.

20. Device as claimed in claim 17, wherein the substrate (3) is lithium niobate or lithium tantalate in which, respectively, titanium or nobium is diffused to create the waveguides.

21. Device as claimed in claim 17, wherein the substrate (3) is made of gallium arsenide in which the waveguides have been made by ion or proton implantation.

# FIG.1

FIG.2

# FIG.3